# EUROPEAN PATENT APPLICATION

(11) **EP 1 411 460 A2**
(43) Date of publication of application: **21.04.2004**
(21) Application number: 03090355.3
(22) Date of filing: 17.10.2003
(51) Int. Cl.: G06K 9/22, H04M 1/2745, H04N 1/00

(54) **Portable communication apparatus having a character recognition function**

(30) Priority: 17.10.2002 JP 2002302798
(71) Applicant: NEC CORPORATION, Tokyo (JP)
(72) Inventor: Kurosawa, Shigeru, Kamikawamachi, Kodama-gun, Saitama (JP)
(74) Representative: Patentanwälte Wenzel & Kalkoff

(57) **Abstract**

A portable communication apparatus has a camera section for capturing an image depending on an operation of a shutter key and a character recognition section for recognizing characters from an captured image. A character-size adjustment indicator is provided on the display. The character-size adjustment indicator has a size which provi des a sufficiently high success rate in character recognition when at least one character included in the captured image fits into the reference frame.

## Description

The present invention relates to a portable communication apparatus such as a portable telephone device or a personal information terminal, and in particular to a portable communication apparatus equipped with an image-capturing device.

In general, a commercially available portable telephone device is provided with various kinds of information input means, for example, operation keys including a ten-key pad and an image-capturing device such as a digital camera. Various types of camera-equipped portable telephones have been proposed (e.g. Japanese Patent Application Unexamined Publication No. 2002-232544).

A portable telephone device has a memory incorporated therein, which is designed to store telephone numbers, mail addresses and other character data. In general, these characters are manually entered one by one through an input device such as a ten-key pad. Accordingly, it is difficult to enter character data in a short time without operating errors.

On the other hand, optical character recognition devices or optical character readers are well known as disclosed in Japanese Patent Application Unexamined Publication Nos. 2002-133367 and 2002-74266. However, these conventional character recognition devices are not predicated on small-sized portable equipment and therefore cannot be applied directly to a portable telephone device.

An object of the present invention is to provide a portable communication device allowing easy data input without errors.

According to the present invention, a portable coinmunicalion apparatus includes : an image-capturing section for capturing an image depending on an operation of a shutter key; and a character recognition section for recognizing characters from an captured image. The recognized characters may be displayed on a display and, if necessary, they are stored into a memory. It is preferable to determine the kind of the recognized characters, for example, e-mail address, URL or phone number. If it is an e-mail address, then a mailer program preferably starts. If it is a URL, then a browser program automatically starts. If it is a phone number, a call may be made at the phone number,

In this manner, necessary data can be entered through the image-capturing section, allowing the user to enter data in a short time without operating errors.

Preferably, the portable communication apparatus further includes: a display for displaying at least the captured image; and a character-size adjustment indicator provided on the display, wherein the character-size adjustment indicator comprises a reference frame having a size which provides a sufficiently high success rate in character recognition when at least one character included in the captured image fits into the reference frame.

As an embodiment of the present invention, the character-size adjustment indicator may appear on the display when portable communication apparatus is set to a character recognition mode. Alternatively, the character-size adjustment indicator may be previously fixed on the display when portable communication apparatus is set to a character recognition mode. For example, the character-size adjustment indicator is printed on the display. The reference frame may be rectangular-shaped andori ented horizontally with respect to the display.

There is an optimum size of characters to be recognized by the character recognition section. The optimum size may be dependent on the size and resolution of the display, the resolution of an image processor, and the performance of character recognition section. Therefore, the character-size adjustment indicator has the reference frame having a size providing a sufficiently high success rate in character recognition when at least one character included in the captured image fits into the reference frame. In order that a string of displayed characters to be recognized fits into the reference frame, the user moves closer to or away from the subject to be captured. When the displayed characters arc appropriately accommodated within the reference frame, the user clicks the shutter key to capture the image including the characters.

The portable communication apparatus further includes a timer for delaying an image-capturing operation of the image-capturing section by a predetermined time period after the operation of the shutter key has been completed. Since the portable telephone device is usually small-sized and lightweight, clicking the shutter key causes its body to easily shake, so that the captured image becomes blurred, resulting in reduced character-recognition success rate. To prevent camera shake when clicking, an actual image capturing operation of the camera section 17 is activated after a lapse of the predetermined time period after the shutter key has been clicked.

The portable communication apparatus may further include: a program memory storing a plurality of programs including a mailer program and a browser program; and a processor for executing at least one program thereon, wherein when a string of the recognized characters represents an e-mail address, the processor starts the mailer program, when a string of the recognized characters represents a URT, (uniform resource locator), the processor starts the browser program, and when a string of the recognized characters represents a phone number, the processor starts making a call at the phone number.

The portable communication apparatus may further include: a memory storing a plurality of types of recognition criterion each corresponding to different types of a string of characters to be recognized, wherein the character recognition section uses one of the types of recognition criterion to recognize characters from the captured image.

According to another aspect of the present invention, a data input method in a portable communication apparatus having an imago-capturing function of capturing an image, includes: capturing an image depending on an operation of a shuller key; and recognizing characters from a captured image to enter the characters as input data.

According to still another aspect of the present invention, a method for recognizing characters in a portable communication apparatus having an image-capturing device and a display, includes: a) setting a character-size adjustment indicator on the display, wherein the character-size adjustment indicator comprises a reference frame having a size which provides a sufficiently high success rate in character recognition; b) capturing an image depending on an operation of a shutter key when at least one character displayed on the display fits into the reference frame; c) recognising the at least one character within the reference frame from a captured image; and d) displaying recognized characters in a predetermined display area on the display.

The method preferably further includes the step of e) repeating the steps b) -d) by sequentially selecting portions of a string of characters displayed on the display, each portion including at least one character which fits into the reference frame, wherein the recognized characters are displayed on the display by combining the portions in series, each of which includes at least one recognized character.

The step c) may include: c.1) storing a plurality of types of recognition criterion each corresponding to different types of a string of characters to be recognized; c.2) determining a type of a spring of characters to be recognized; and c.3) recognizing the at least one character within the reference frame based on a recognition criterion corresponding to the type of the string of characters to be recognised.
FIG. 1A is a perspective view of a portable telephone device in an opened state according to the present invention;
FIG. 1B is a perspective view of the portable telephone device in a closed state according to the present invention;
FIG. 1C is a back plan view of the portable telephone device in an opened state according to the present invention;
FIG. 2 is a block diagram showing an internal circuit of the portable telephone device according to a first embodiment of the present invention;
FIG. 3 is a flowchart showing a procedure of an image-capturing operation of the portable telephone device according to the first embodiment;
FIG. 4 is a diagram showing an example of a character-size adjustment indicator displayed on screen;
FIGS. 5A-5C are diagrams showing an character-size adjustment operation;
FIGS. 5D is a diagram showing how to shoot a long string of characters;
FIGS. 6A and 6B are flowcharts showing an operation of the portable telephone device according to the first embodiment;
FIC. 7 is a flowchart, showing a procedure of an image-capturing operation of the portable telephone device according to a second embodiment of the present invention;
FIG. 8 is a flowchart showing a procedure of an image-capturing operation of the portable telephone device according to a third embodiment of the present invention; and
FIG . 9 is a flowchart showing a character recognition mode setting operation of the portable telephone device according to a fourth embodiment of the present invention.

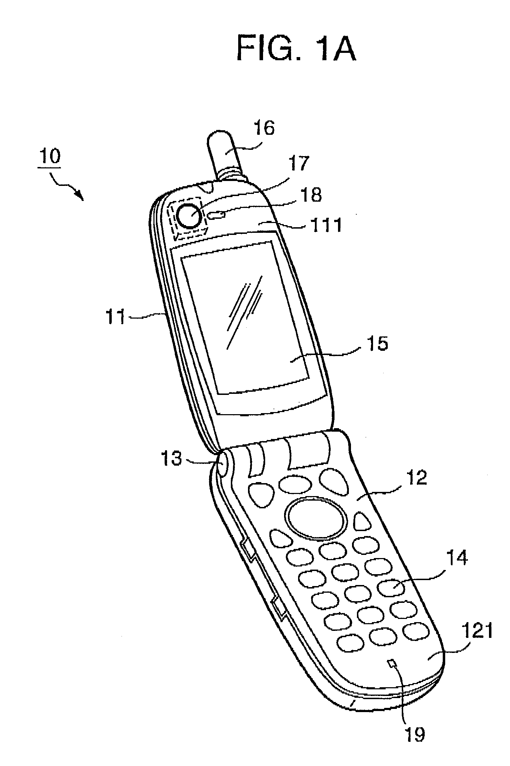

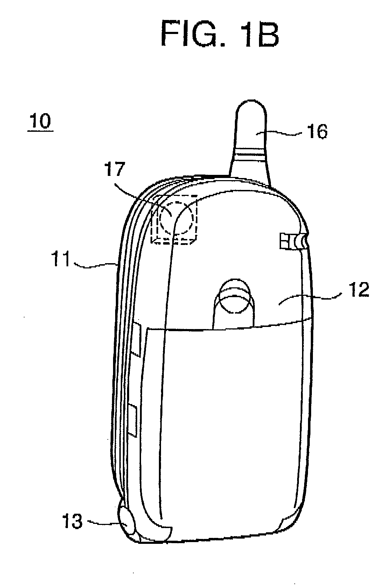

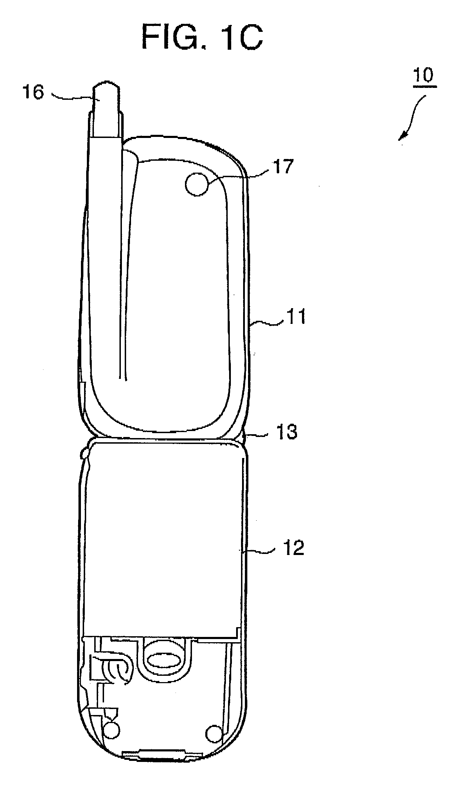

As shown in Figs. 1A-1C, a camera-equipped portable telephone device 10 is composed mainly of three portions: a first housing 11, a second housing 12, and a hinge section 13 which connects the first housing 11 and the second housing 12 so that they are freely opened and closed.

The first housing 11 has a display 15, an antenna 16, a camera section 17, and a telephone-receiver (speaker) 18 provided on a main surface 111 thereof, which will be hidden inside when the portable telephone device is closed. The display 15 may be a liquid-crystal display, on which necessary information such as calling phone numbers, e-mail messages or captured images are displayed. The camera section 17 is equipped with a small-sized and slim image-capturing device such as a CCD (charge-coupled device) or CMOS image sensor, which is incorporated in the first housing 11. The lens portion of the camera section 17 is exposed and located on the main surface 111 at the upper position thereof.

The second housing 12 has operation keys and a telephone-transmitter (microphone) 19 provided on a main surface 121 thereof, which will be hidden inside when the portable telephone device is closed. The operation keys 14 are used to enter data or instructions such as communication operations. In this embodiment, a predetermined key of the operation keys 14 is used as the camera's shutter.

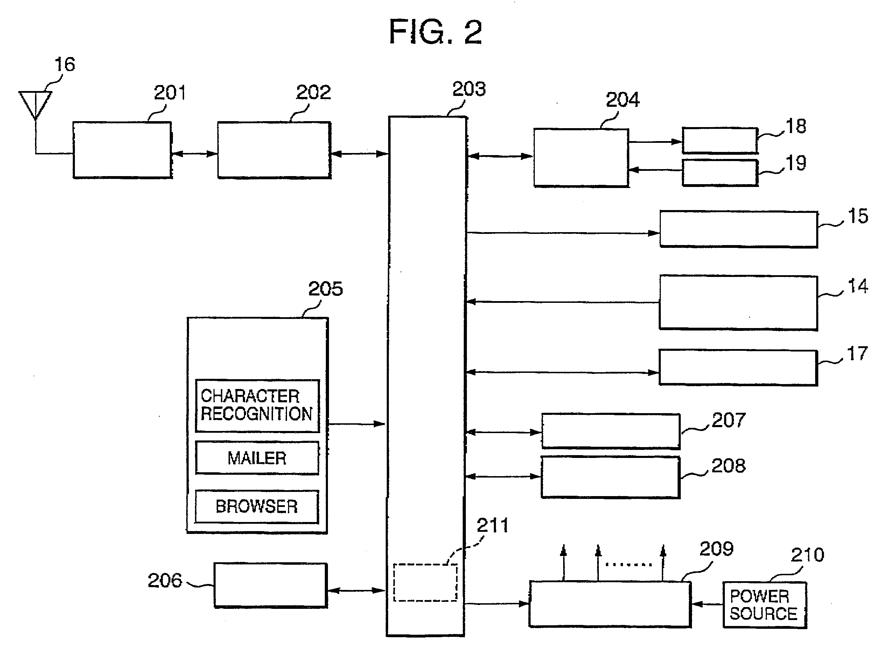

A main circuit of the portable telephone device 10 is incorporated in the second housing 12. Another circuit including the camera section 17 and the display 15 is incorporated in the first housing 11 and is electrically connected to the main circuit through a wiring substrate. The circuit structure of the portable telephone device 10 will be described with reference to Fig. 2.

### 1. First embodiment

### Circuit structure

Referring to Fig. 2, the portable telephone device 10 has a communication system composed ot a radio transceiver 201, a baseband processor 202, a coder/decoder (CODEC) 204, which are controlled by a central processing unit (CPU) 203. The CODEC 204 is connected to the speaker 18 and the microphone 19.

The CPU 203 executes necessary programs read from a program memory 205 to perform communication and other data processing operations using a memory 206. The program memory 205 stores an operating system and a plurality of application programs including a character recognition program, a mailer program, and a browser program. The memory 206 stores phone numbers, mail addresses and Web site addresses, which are registered by default or by a user operating the operation keys 14 or the camera as described later.

The camera section 17 captures an image depending on user's instruction. The captured image is stored in an image memory 207, is displayed on the display 15, and is processed by an image processor 208 under the control of the CPU 203. The character recognition of the captured image is performed by the character recognition program running on the CPU 203, which will be described later. Power supply to the circuits is controlled by a power supply controller 209 supplied with power by a power source such as a battery.

### Character-size adjustment indicator

In this embodiment, the portable telephone device 10 can be set to a selected one of operation modes : telephone mode; camera mode; character-recognition mode; e-mail transmission mode; and web browsing mode.

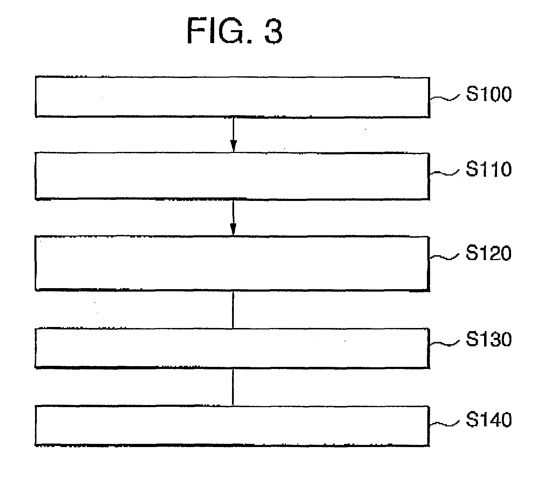

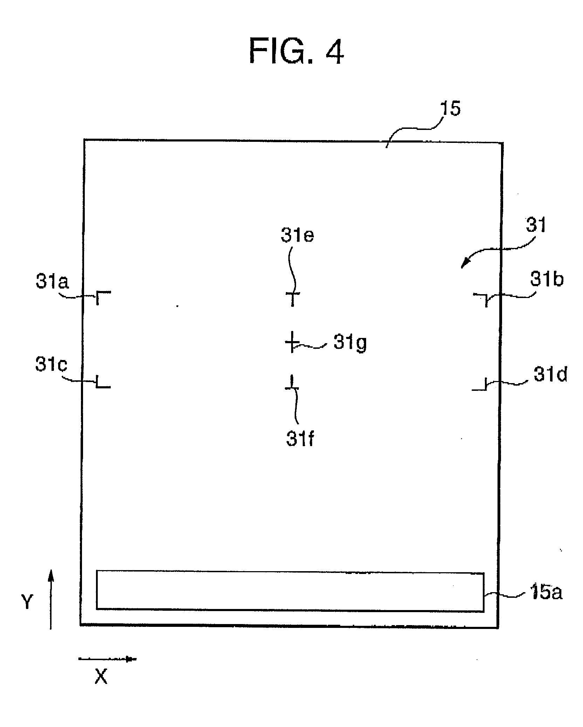

Referring to Fig. 3, the CPU 203 controls the display 15 so that a mode setting menu is initially displayed on the display 15 (step S100). When the character-recognition mode is selected (step S110), the CPU 203 creates a character-size adjustment indicator 31 to display it on the display 15 as shown in Fig. 4 (step S120). The size of displayed characters on the screen can be changed by a user moving closer to or moving away from the subject to be captured. After having adjusted the size of characters so as to fit into the character-size adjustment indicator (step S130), the user clicks the shutter key to capture an image including the characters (step S140).

As shown in Fig. 4, the character-size adjustment indicator 31 appears like a rectangular frame oriented horizontally on the display 15 at the approximate centor position thereof. The character-size adjustment indicator 31 may be located at the upper or lower center position of the display 15. The character, size adjustment indicator 31 is a reference frame composed of four corner marks 31a-31d, upper center mark 31e, lower center mark 31f, and a center mark 31g. The size of the character-size adjustment indicator 31 is determined so that the character recognition process on the CPU 203 can provide the highest success rate in recognition. Recognized characters are displayed in a recognized character display area 15a.

As shown in Fig. 4, the character-size adjustment indicator 31 is preferably oriented in the longitudinal (X axis) direction on the display 15 because it is very difficult for a user to read characters arranged in the Y-axis direction on the display 15. The shape of the character-size adjustment indicator 31 is preferably a rectangle but not limited to it. Any shape may be employed so long as captured characters are arranged therein, for example, a horizontally oriented rhombus, a square, or a horizontally oriented ellipse.

The character-size adjustment indicator 31 preferably appears on the display 15 only when the character recognitionmode is selected (step S110). Alternatively, the character-size adjustment indicator 31 may be fixedly formed on the display 15. The character-size adjustment indicator 31 may be formed by printing, engraving, molding, or seal-adhering on the display 15. Such a fixed character-size adjustment indicator 31 eliminates the need of a program that instructs the CPU 203 to display it on the display 15 when the character recognition mode is selected, resulting in lightened load on the CPU 203.

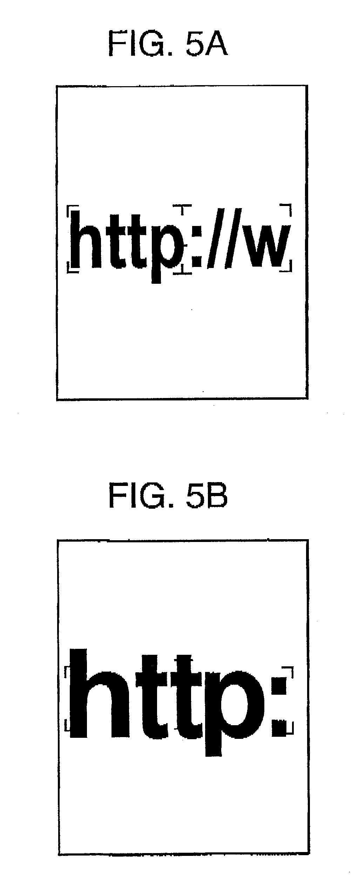

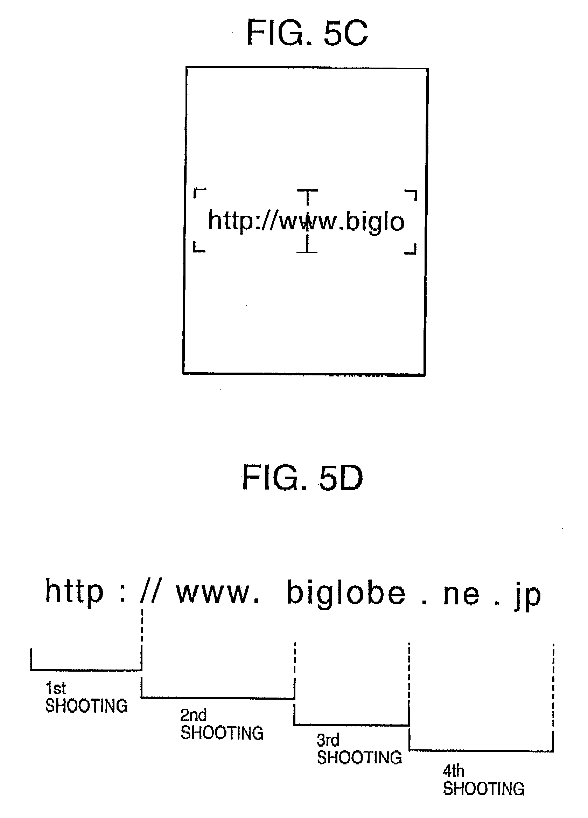

As shown in Fig. 5A, the user adjusts the size of displayed characters on the screen by moving the portable telephone device 10 closer to or away from the subject to be captured so that the characters on the screen fit into the character-size adjustment indicator 31. When the characters on the screen lie off the character-size adjustment indicator 31 as shown in Fig. 5B, the user, that is, the camera 17 of the portable telephone device 10, moves away from the subject. When the characters on the screen are too small with respect to the character-size adjustment indicator 31 as shown in Fig. 5C, the user moves closer to the subject.

In this way, the size of characters on the screen can be adjusted so that they fit into the character-size adjustment indicator 31. When the characters on the screen fit into the character-size adjustment indicator 31, they can be read at the highest success rate in recognition. A recognized portion restricted into the character-size adjustment indicator 31 allows a higher success rate in recognition and the reduced time required reading characters.

As shown in Fig. 5D, a long string of characters can be captured by sequentially shooting portions of the long string of characters, which will be described later.

### Character recognition

As described above, after having adjusted the size of characters to be shot so as to fit into the character-size adjustment indicator 31 as described above, the user clicks the shutter key to shoot an image including the characters.

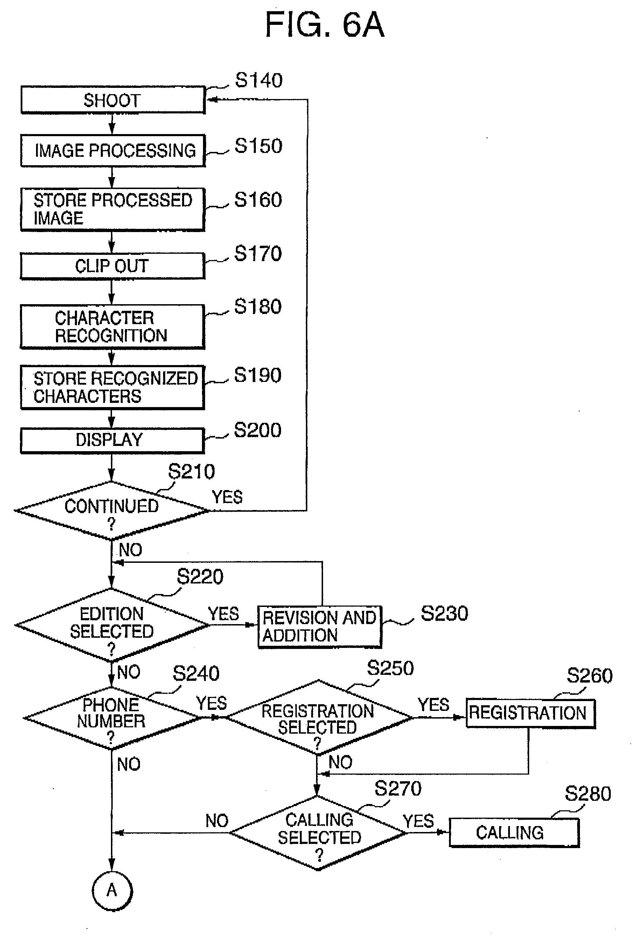

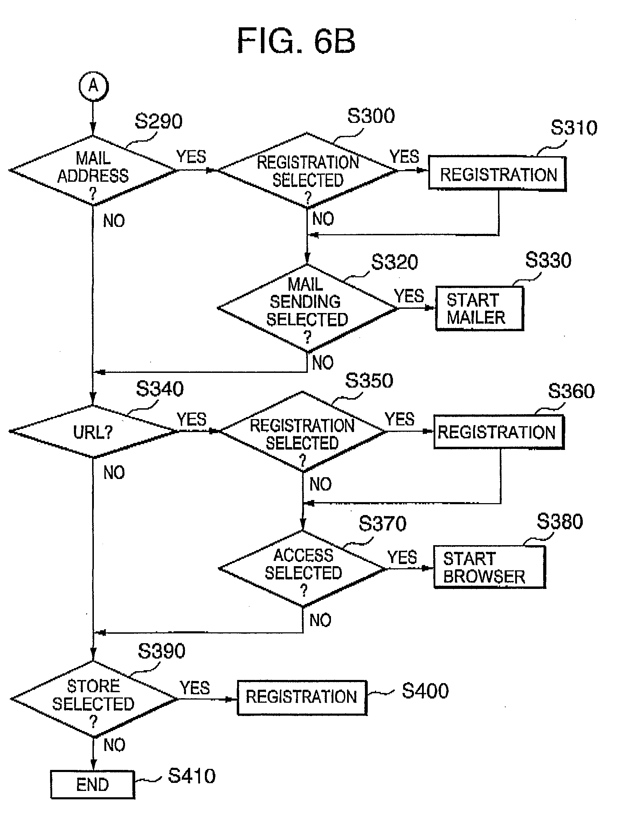

Referring to Figs. 6A and 6B, when the camera section 17 has captured the image including the characters (step S140), the CPU 203 instructs the image processor 208 to process the image data (step S150) and, as necessary, stares the processed image data into the image memory 207 (step S160).

Subsequently, the CPU 203 clips out an image defined by the character-size adjustment indicator 31 (step S170) and calls the character recognition program to recognize the characters within the clipped image (step S180). The recognized characters are stored into the image memory 207 or other memory (step S190) and are displayed in the recognized character display area 15a on the display 15 (step S200).

When the recognized characters have been displayed in the recognized character display area 15a, the CPU 203 instructs the display 15 to prompt the user to determine whether the character recognition shooting is repeated (step S210). When the length of a string of characters is longer than the longiludinal length ot the character-size adjustment indicator 31 (YES in step S210) , it is necessary to repeat the steps S140-S200 to sequentially shoot portions of the string of characters several times as shown in Fig. 5D.

For example, assuming that a string of characters is "http://www.biglobe.ne.jp" and the character-size adjustment indicator 31 can accommodate six characters, the first shooting captures the first six characters "http:/" and the recoqnized characters "http: /" are displayed on the recognized character display area 15a. The second shooting captures the second six characters "/www.b" and the recognized characters "/www.b" are displayed following "http:/" on the recognized character display area 15a. Similarly, the third shooting captures the third six characters "iglobe" and the recognized characters "iglobe" are displayed following "/www.b" on the recognized character display area 15a. The fourth shooting captures the last six characters ".ne. jp" and the recognized characters ".ne.jp" are displayed following "iglobe" on the recognized character display area 15a. In this manner, a string of characters that is longer than the character-size adjustment indicator 31 can be captured and recognized by sequentially shooting and recognising portions of the string of characters several times.

When the string of characters has been captured once or several times (NO in step S210), the CPU 203 instructs the display 15 to prompt the user to determine whether the recognized characters displayed on the recognized character display area 15a is edited (step S220). If the recognized characters displayed on the recoqnized character display area 15a includes errors or erroneously recognized characters (YES in step S220), then the user operates the keys 14 to correct or revise the errors or, as necessary, add characters (step S230).

When no edition is needed (NO in step S220), the CPU 203 determines whether the determined string of characters indicates a phone number (step S240). When it is determined that it indicates a phone number (YES in step S240), the CPU 203 instructs the display 15 to prompt the user to determine whether the phone number is registered (step S250). When registration is selected (YES in step S250) , the phone number is registered into the memory 206 (step S260). When registration is not selected (NO in step S250) or when the phone number has been registered into the memory 206, the CPU 203 instructs the display 15 to prompt the user to determine whether a call is made at the phone number (step S270). When calling is selected (YES in step S270), the CPU 203 controls the baseband processor 202 and the radio transceiver 201 to make a call at the phone number (step S280).

When the determined string of characters does not indicate a phone number (NO in step S240) or when calling is not selected (NO in step S270) , the CPU 203 determines whether the determined string of characters indicates a mail address (step S290). When it is determined that it indicates a mail address (YES in step S290), the CPU 203 instructs the display 15 to prompt the user to determine whether the mail address is registered (step S300). When registration is selected (YES in step S300), the mail address is registered into the memory 206 (step S310). When registration is not selected (NO in step S300) or when the mail address has been registered into the memory 206, the CPU 203 instructs the display 15 to prompt the user to determine whether a mail is sent to the mail address (step S320). When mail sending is selected (YES in step S320), the CPU 203 starts the mailer program, so that the user creates a mail and then sends it to the mail address (step S330).

When the determined string of characters does not indicate a mail address (NO in step S290) or when the mail sending is not selected (NO in step S320), the CPU 203 determines whether the determined string of characters indicates a URL (uniform resource locator) (step S340). When it is determined that it indicates a URT, (YES in step S340) , the CPU 203 instructs the display 15 to prompt the user to determine whether the UHL is registered (step S350) . When registration is selected (YES in step S350), URL is registered into the memory 206 (step S360). When registration is not selected (NO in step S350) or when the URL has been registered into the memory 206, the CPU 203 instructs the display 15 to prompt the user to determine whether access to the URL is made (step S370) . When the URL access is selected (YES in step S370), the CPU 203 starts the browser program so that the user automatically visit the Web site without the need of other operations (step S380).

When the determined string of characters does not indicate a URL (NO in step S340) or when the URL access is not selected (NO in step S370) , it is determined that the determined string of characters is data other than the above-mentioned addresses, for example, postal address, name, or location name. Therefore the CPU 203 instructs the display 15 to prompt the user to determine whether the determined string of characters is registered (step S390). When registration is selected (YES in step S390) , the data is registered into the memory 206 (step S400) . When registration is not selected (NO in step S390), the CPU 203 deletes the determined string of characters and terminates the character recognition process (step S410).

### 2. Second embodiment

According to the above-described first embodiment, the entire captured image is subjected to the image processing and only the image portion in the character-size adjustment indicator 31 is clipped out for the character recognition.

According to a second embodiment of the present invention, in contrast, the image processor 208 processes only the image portion in the character-size adjustment indicator 31 and thereafter the processed image portion is used for the character recognition. Accordingly, the time required for image processing and character recognition can be reduced.

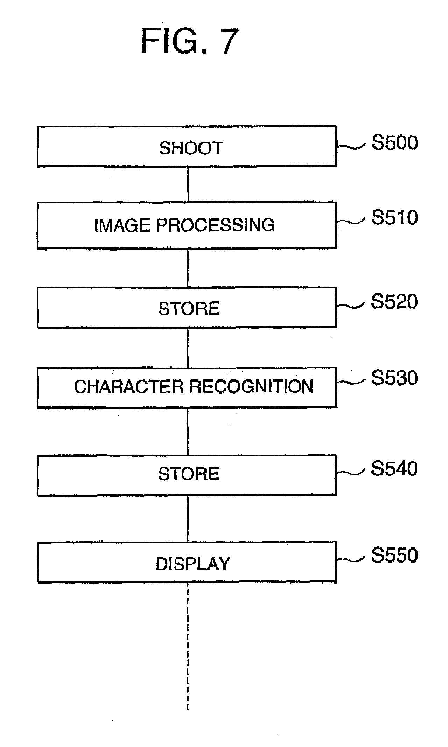

Referring to Fig. 7, when the camera section 17 has captured the image including the characters (step S500), the CPU 203 instructs the image processor 208 to process the image portion in the character-size adjustment indicator 31 (step S510) and, as necessary, stores the processed image data into the image memory 207 (slep S520).

Subsequently, the CPU 203 calls the character recognition program to recognize characters within the processed image portion (step S530). The recognized characters are stored into the image memory 207 or other memory (step S540) and are displayed in the recognized character display area 15a on the display 15 (step S550). Thereafter, the steps S210-S410 are performed as described belore.

### 3. Third embodiment

According to a third embodiment of the present invention, a timer 211 which is included in the CPU 203 is used to delay an actual image capturing operation of the camera section 17 by a predetermined time period when the user clicks the shutter key. Since the portable telephone device 10 is usually small-sized and lightweight, clicking the shutter key causes its body to easily shake, so that the captured image becomes blurred, resulting in reduced character-recognition success rate. To prevent camera shake when clicking, an actual image capturing operation of the camera section 17 is activated after a lapse of the predetermined time period after the shutter key has been clicked. The predetermined time period may be determined to be a time period during which the camera movement due to clicking the shutter key becomes settled back. In this embodiment, the timer 211 is set for N seconds, for example, about 0.5 seconds. Such a delay time period may be previously set by default or may be determined to be a desired period by the user operating the keys 14 through the display 15.

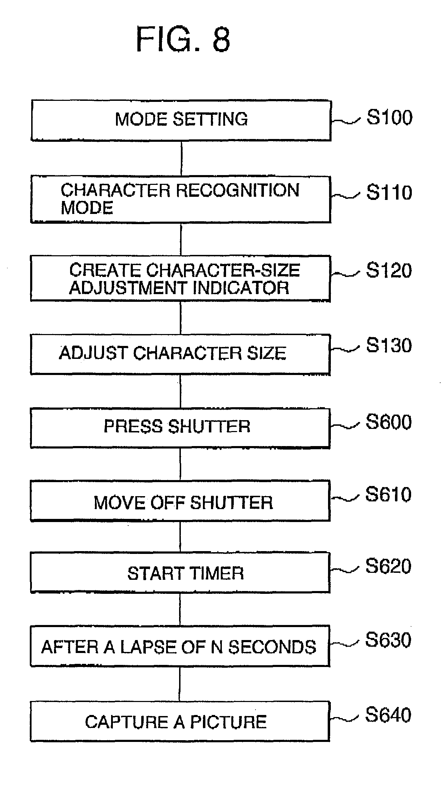

Referring to Fig. 8, the steps S100-S130 are similar to those described in Fig. 3. After having adjusted the size of characters so as to fit into the character-size adjustment indicator (step S130), the user depresses the shutter key to capture an image including the characters (step S600) and then moves his/her finger off the shutter key (step S610).

When the CPU 203 detects that the finger is moved off the shutter key and thereby the shutter key goes back to the normal position, the CPU 203 starts the timer 211 (step S620) . When N seconds have elapsed, a timeout occurs (step S630) and thereby the CPU 203 activates the camera section 17 to capture an image (step S640). In this manner, the influence of camera shake on the qualify of image can be effectively prevented, resulting in a sharp character image and thereby a higher success rate in recognition.

### 1. Fourth embodiment

According to a fourth embodiment of the present invention, the criterion of character recognition is changed depending on what kind of address is indicated by a string of characters. The character recognition program to run on the CPU 203 has the option of selecting one of recognition modes dedicated for phone number, mail address and URL, and an automatic setting mode. When the recognition mode dedicated for phone numbers has been selected, the CPU 203 uses the criterion dedicated for phone numbers to recognize only phone numbers from the captured image. Therefore the success rate in recognition and the recognition speed both become higher. It is the same with the other recognition modes.

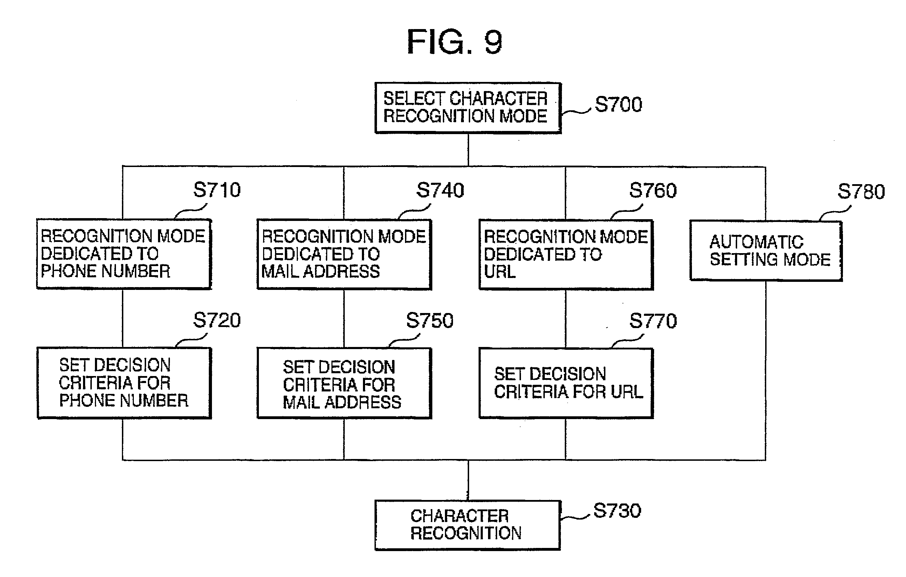

As shown in Fig. 9, in the character recognition step S180 of Fig. 6A and S530 of Fig. 7, the CPU 203 instructs the display 15 to prompt the user to select one of the recognition modes (step S700).

### Phone number recognition

When the recognition mode dedicated for phone numbers has been selected (step S710), the CPU 203 reads the phone number criterion and uses it to recognize a captured string of characters as a phone number (step S720) . In the case of the phone number criterion, when a string of numerals and a separator such as hyphen or parenthesis are found in the captured image, the CPU 203 retrieves only numerals 0-9 from the captured image and omits the other characters. In most cases, a phone number includes hyphens or parentheses, which are used to discriminate between an area code and a prefix local number and between the prefix local number and a local number.

In the case where the string of characters is sequentially captured each predetermined length, if the first character of second or later captured string is the right parenthesis ")", then it is not omitted only when the first captured string includes the left parenthesis "(". Assuming that the first captured string is "090(1234" and the second captured string is ") 5678", the first character of the second captured string ") " is not a numeral but an effective character because the first captured string includes " (". As a result, the CPU 203 combines "090 (1234" with ") 5678" to recognize a string of characters "090(1234)5678" as a phone number.

### Mail address recognition

When the recognition mode dedicated for mail address has been selected (step S740) , the CPU 203 reads the mail address criterion and uses it to recognize a captured string of characters as a mail address (step S750). In the case of the mail address criterion, when a string of characters "il" followed by a colon ": " or an at sign "@" is found in the captured image, the CPU 203 retrieves only the following characters from the captured image and omits the other characters: 1) numerals 0-9; 2) lower-case alphabetic characters a-z; 3) upper-case alphabetic characters A-Z, 4) hyphen "-"; 5) at sign "@"; 6) under bar "_"; 7) colon " : "; and 8) dot. " .".

In most cases, an e-mail address is written in the following form: "e-mail:abc@def.ghij.ne.jp". Since the first string of characters "e-mail:" is not a part of e-mail address, the CPU 203 retrieves the string of characters "il" followed by a colon ":" and omit "e-mail:" from "e-mail:abc@def.ghij.ne.jp". When "@" is found, the CPU 203 recognises the string of characters without "e-mail :" as an e-mail address.

### URL recognition

When the recognition mode dedicated for URL has been selected (step S760), the CPU 203 reads the URL criterion and uses it to recognize a captured string of characters as a URL (step S770). In the case of the URL criterion, the CPU 203 recognizes a captured string of characters as a URL when a string of the first seven or less characters of the captured characters match one of the following strings of characters: a) "'https://"; b) "http://"; c)"s://"; d)":// "; and c) "www.".

These strings of characters are needed for URL notation therefore, when these are found, the CPU 203 can determine that the captured string of characters is a URL. In this case, the CPU 203 retrieves only the following characters from the captured image and omits the other characters: 1) numerals 0-9; 2) lower-case alphabetic characters a-z; 3) upper-case alphabetic characters A-Z, 4) hyphen "-"; 5) " %"; 6) "&"; 7) "="; 8) "~"; 9) "?"; 10) "/"; 11) colon ":"; 12) dot "."; and 13) under bar "_".

When the CPU 203 determines that the captured sLring of characters is a URL, all characters before the above-described strings of a) to e) are deleted . In this manner, the CPU 203 recognizes the captured string of characters as a URL.

### Automatic recognition

When the automatic recognition mode has been selected (step S780), the CPU 203 recognizes a captured string of characters as phone number, mail address, URL, or other data without using any criterion (step S730) - Since no criterion is used, d success rate in recognition decreases, compared with the case of using criterion, but the automatic recognition mode is still effective in the case where it is not determined which one of phone number, mail address, and URL the captured string of characters is.

The functions as described above may be implemented by software programs running on the CPU 203. Such software programs may be stored in the proqram memory 205 incorporated in the portable telephone device 10 or a removable recording medium. The program memory 205 may be a memory chip such as RAM (random access memory) or ROM (read only memory) , EPROM (erasable programmable read only memory, EEPROM (electrically erasable programmable read only memory), Smart memory™, flash memory, or rewritable memory card such as Compact flash™. An external recording medium may be used as the program memory 205 or the removable recording medium, for example, CD-ROM, PD, MO, DVD-ROM, DVD-RAM, FD, or HDD.

## Claims

1. A portable communication apparatus **characterized by** comprising:
an image-capturing section (17) for capturing an image depending on an operation of a shuller key; and
a character recognition section (203) for recognizing characters from a captured image.

2. The portable communication apparatus according to claim 1, further comprising:
a display (15) for displaying at least the captured image; and
a character-size adjustment indicator (31) providedon the display, wherein the character-size adjustment indicator comprises a reference frame having a size which provides a sufficiently high success rate in character recognition when at least one character included in the captured image fits into the reference frame.

3. The portable communication apparatus according to claim 2, wherein the character-size adjustment indicator appears on the display when portable communication apparatus is set to a character recognition mode.

4. The portable communication apparatus according to claim 2, wherein the character-size adjustment indicator is previously fixed on the display when portable communication apparatus is set to a character recognition mode.

5. The portable communication apparatus according to claim 2, wherein the reference frame is shaped like a rectangle oriented horizontally with respect to the display.

6. The portable communication apparatus according to claim 1, further comprising:
a timer (211) for delaying an image-capturing operation of the image-capturing section by a predetermined time period after the operation of the shutter key has been completed.

7. The portable communication apparatus according to claim 6, wherein the predetermined time period is set through an input device of the portable communication apparatus.

8. The portable communication apparatus according to claim 2, further comprising:
a timer for delaying an image-capturing operation of the image-capturing section by a predetermined time period after the operation of the shutter key has been completed.

9. The portable communication apparatus according to claim 1, further comprising:
a program memory (205) storing a plurality of programs including a mailer program and a browser program; and
a processor (203) for executing at least one programm thereon,
wherein
when a string of the recognized characters represents an e-mail address, the processor starts the mailer program,
when a string of the recognized characters represents a URL (uniform resource locator), the processor starts the browser program, and
when a string of the recognized characters represents a phone number, the processor starts making a call, at the phone number.

10. The portable communication apparatus according to claim 1 or 9, further comprising:
a memory (205) storing a plurality of types of recognition criterion each corresponding to different types of a string of characters to be recognized,
wherein the character recogniti on section uses one of the types of recognition criterion to recognize characters from the captured image.

11. A data input method in a portable communication apparatus having an image capturing function of capturing an image, the method comprising:
capturing an image depending on an operation of a shutter key; and
recognizing characters from a captured image to enter the characters as input data.

12. A method for recognizing characters in a portable communication apparatus having an image-capturing device and a display, the method comprising:
a) setting a character-size adjustment indicator on the display, wherein the character-size adjustment indicator comprises a reference frame having a size which provides a sufficiently high success rate in character recognition;
b) capturing an image depending on an operation of a shutter key when at least one character displayed on the display fits into the reference frame;
c) recognizing the at least one character within the reference frame from a captured image; and
d) displaying recognized characters in a predetermined display area on the display.

13. The method according to claim 12, wherein the step c) comprises:
c.1) image-processing the captured image to produce a processed image;
c.2) clipping out a portion of the processed image within the reference frame; and
c.3) recognizing the at least one character from the portion of the processed image.

14. The method according to claim 12, wherein the step c) comprises:
c.1) image-processing of a portion of the captured image within the reference frame to produce a processed image; and
c.2) recognizing the at least one character from the processed image.

15. The method according to claim 12, further comprising:
e) repeating the steps b)-d) by sequentially selecting portions of a string of characters displayed on the display, each portion including at least one character which fits into the reference frame, wherein the recognized characters are displayed on the display by combining the portions in series, each of which includes at least one recognized character.

16. The method according to claim 12, wherein the step b) comprises:
delaying an image-capturing operation by a predetermined time period after the operation of the shutter key has been completed.

17. The method according to claim 12, wherein the step c) comprises:
c.1) storing a plurality of types of recognition criterion each corresponding to different types of a string of characters to be recognized;
c.2) determining a type of a string of characters to be recognised; and
c. 3) recognizing the at least one character within the reference frame based on a recognition criterion corresponding to the type of the string of characters to be recognized.

18. The method according to claim 17, further comprising:
e) when the string of the characters recognized is of an e-mail address type, the processor starts a mailer program,
f) when the string of the characters recognized is of a URL (uniform resource locator) type, the processor starts a browser program, and
q) when the string of the characters recognized is of a phone number type, the processor starts making a call, at a phone number represented by the sLring of the characters recognized.

19. A program instructing a computer to recognize characters in a portable communication apparatus having an image-capturing device and a display, the program comprising the steps of:
a) setting a character-size adjustment indicator on the display, wherein the character-size adjustment indicator comprises a reference frame having a size which provides a sufficiently high success rate in character recognition;
b) capturing an image depending on an operation of a shutter key when at least one character displayed on the display fits into the reference frame;
c) recognizing the at least one character within the reference frame from a captured image; and
d) displaying recognized characters in a predetermined display area on the display.
